(19) **Europäisches Patentamt / European Patent Office / Office européen des brevets**

(11) **EP 2 235 690 B1**

(12) **EUROPEAN PATENT SPECIFICATION**

(45) Date of publication and mention
of the grant of the patent:
**18.07.2018 Bulletin 2018/29**

(21) Application number: **08870882.1**

(22) Date of filing: **29.12.2008**

(51) Int Cl.:
**G07B 15/06** (2011.01)

(86) International application number:
**PCT/IB2008/055562**

(87) International publication number:
**WO 2009/090515 (23.07.2009 Gazette 2009/30)**

(54) **ROAD TOLL SYSTEM**

STRASSENMAUTSYSTEM

SYSTEME DE PEAGE ROUTIER

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **15.01.2008 EP 08100506**

(43) Date of publication of application:
**06.10.2010 Bulletin 2010/40**

(73) Proprietor: **Telit Automotive Solutions NV
3001 Leuven (BE)**

(72) Inventor: **COPEJANS, Gert
Redhill Surrey RH1 1DL (GB)**

(74) Representative: **Pearl Cohen Zedek Latzer Baratz
UK LLP
16 Upper Woburn Place
London WC1H 0BS (GB)**

(56) References cited:
**EP-A- 1 320 075        EP-A- 1 376 477
EP-A- 1 457 928        EP-A- 1 548 652
WO-A1-2008/068679    WO-A2-2008/032075
DE-A1- 19 744 419      US-A1- 2002 035 422**

**Description**

This invention relates to road toll systems, for implementing an automatic payment system for deducting road tolls based on the road sections used.

The integrated use of telecommunications and informatics is known as telematics. Vehicle telematics systems may be used for a number of purposes, including collecting road tolls, managing road usage (intelligent transportation systems), tracking fleet vehicle locations, recovering stolen vehicles, providing automatic collision notification, location-driven driver information services and in-vehicle early warning notification alert systems (car accident prevention).

Road tolling is considered as the first likely large volume market for vehicle telematics. Telematics is now beginning to enter the consumer car environment as a multimedia service box for closed services. These markets are still low in volume and are considered as niche markets. The European union and with The Netherlands as a leading country has the intention to introduce road tolling as an obligatory function for every car from 2012 onwards.

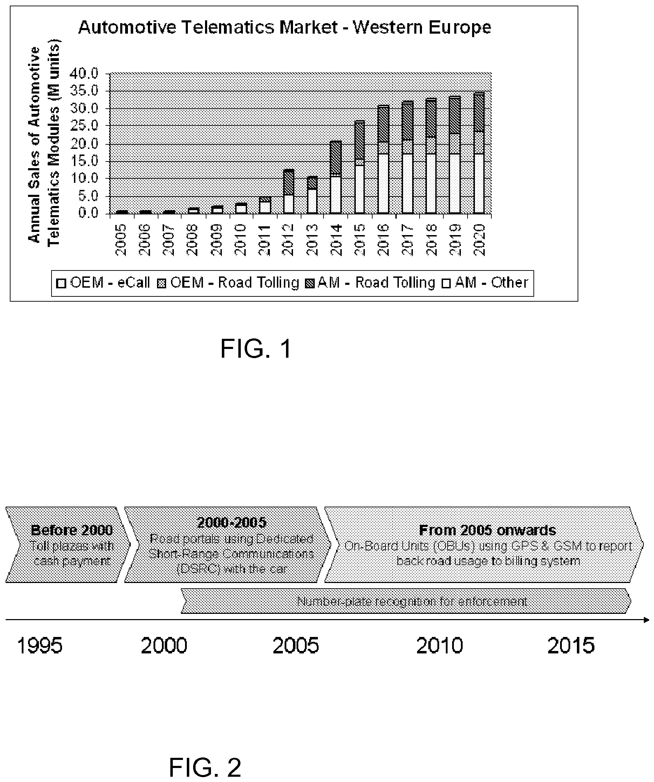

Figure 1 shows the expected volumes for different telematic services over time in Western Europe. The telematics service market is split up into three main parts: road tolling service, e-call (emergency service) and other generic services (such as outlined above). The figure also shows the split between original equipment manufacturers (OEM) namely vehicle manufacturers, and after market (AM) products.

Figure 1 assumes that road tolling will start in the Netherlands in 2012, and will be taken up in other countries around 2014 to 2020. It also assumes that the e-call system will not be made mandatory.

Generally, Figure 1 shows a rapid growth in telematic in-car systems over time.

Figure 2 shows how road tolling functions have been implemented in the past and how this is expected to change in future.

So far, road tolling has been used for high way billing, truck billing and billing for driving a car in a certain area (e.g. London city). Toll plazas at which vehicles must stop are generally used, or else short range communications systems allow automatic debiting of a fund when a vehicle passes.

The road tolling functions needed in the near future will impose the requirement for less (or no) infrastructure and will impose tolling for every mile driven. As shown in Figure 2, it is envisaged that the vehicle will have a GPS system on board and a GSM (mobile telephony network) connection to enable information to be relayed to a centralized road tolling system.

The charging system in an automated road toll system can be based on distance travelled, the time, location and vehicle characteristics. The road tolling may apply to all vehicles or it may exclude certain classes of vehicle (for example with foreign number plates).

US 6,816,707 describes a system consisting of a mobile device and a vehicle unit for mounting in the vehicle. The mobile device is the transaction device. The vehicle unit carries the identity (and maybe other data) of the vehicle. The mobile device and the vehicle unit mutually authenticate each other.

There is a need to increase the security of this type of system and to make fraudulent use of the system as difficult as possible.

EP1457928 discloses a road charging system which combines GPS and GSM systems in order to extend the geographical coverage of the combined system.

WO2008/068679 describes a road toll system including a vehicle-mounted unit comprising a satellite navigation receiver implementing a position tracking function, a memory device storing toll payment information and means for determining the routed taken by the vehicle based on the position tracking function. A disabling system is provided for disabling the vehicle operation based on the road toll payment information. This system uses a satellite navigation receiver to enable infrastructure-free road tolling to be implemented. The system includes a function disabling the vehicle if the road toll fees have not been paid. This saves effort in tracking down users who do not pay their tolls.

WO2008/032075 discloses an apparatus and a method for implementing a road pricing scheme; specifically, a vehicle monitoring device comprising a location device for determining location data; a fuel consumption device for determining fuel consumption data; and a vehicle monitoring processor for receiving and processing the location data and the fuel consumption data.

According to the invention, there is provided a method for validating position tracking information provided by a vehicle-mounted unit having a satellite navigation receiver, the method comprising: determining the routes taken by a vehicle based on the position tracking information provided by the vehicle mounted unit; detecting local vehicle conditions, independent of the satellite signals, using signals from two or more sensors; and validating the authenticity of the position tracking information using the sensor information and detecting a GPS fake data attack when authenticity is not validated; wherein the local vehicle conditions comprise conditions dependent on the absolute position of the vehicle or a change in the position of the vehicle including one or more of: the vehicle speed, the vehicle steering angle, the vehicle distance travelled, and the fuel tank level and the validating comprises verifying that first and second GPS position tracking locations differ by an amount corresponding to a change in position derived from the sensor signals; and wherein the local vehicle conditions further comprise local environmental conditions including ambient light levels and/or the vehicle headlight or tail light output, and the validating comprises verifying that the ambient light levels and/or the vehicle headlight or tail light output are consistent with a corresponding environmental condition at the time and location based on the position tracking information.

There is also provided a road toll system for implementing a method according to the invention comprising a vehicle mounted unit having a satellite navigation receiver implementing a position tracking function, wherein the system further comprises: means for determining the routes taken by the vehicle based on the position tracking information; one or more sensors for detecting the local vehicle condition; and means for validating the authenticity of the position tracking information using the sensor information.

This system uses a satellite navigation receiver to enable infrastructure- free road tolling to be implemented. The system further provides a way of preventing a so-called fake GPS attack, i.e. providing false GPS data to reduce the road tolls payable. This is achieved by providing validation of the GPS position information by comparing with independent information collected by the vehicle, termed a "local vehicle condition".

The local vehicle condition sensor does not need to make any estimate of absolute position, but can be used to verify that the difference between satellite receiver signals separated in time is consistent with the detection vehicle motion. Additionally the local vehicle condition comprises the local environmental conditions, and the means for validating is then for verifying that the corresponding environmental condition at the location given by the position tracking function is consistent with the local environmental condition detected by the sensor. This approach is used to verify that the environmental conditions (e.g. the weather or the time) are consistent with those encoded in the satellite signals.

In this case, the sensor is for measuring one or more of: ambient light levels and the vehicle headlight or tail light output.

Weather conditions can also be obtained from meteorological sources.

Alternatively (or additionally) the local vehicle condition can comprise wireless signals broadcast in the vicinity of the vehicle, and the means for validating is then for verifying that the detected wireless signals are consistent with the location given by the position tracking function. In this way, the wireless signals present in the vicinity of the vehicle can be used to provide a rough position estimate of the vehicle.

In this case, the sensor can be for detecting one or more of:

RDS signals of FM radio transmissions;
SI data on DVB or DAB broadcasts; cellular base station signals;
radio signal levels at predetermined frequencies;
naval and avionic signals;
WiFi access point signals.

If the sensor is for detecting mobile telephony signals, the system further comprises a mobile telephony receiver. This can for example be used to update a road toll pricing structure within a memory device of the vehicle mounted unit. It can also be used to relay information about the roads used and/or road tolls to be charged to a central invoicing centre (for a post-pay system).

A mobile telephony receiver can implement a position tracking function (by trilateration of multiple signals from multiple base stations), and the validating means can then verify correspondence between the position tracking information of the mobile telephony receiver and of the satellite navigation receiver.

As mentioned above, the vehicle mounted unit preferably further comprises a first memory device for storing toll payment information. This can be used to store toll values for post-billing, or prepaid toll values, as well as road pricing data.

The system preferably also comprises a memory device (or the same memory device) for storing the sensor information.

Examples of the invention will now be described with reference to the accompanying drawings, in which:

Figure 1 shows how vehicle telematic systems are expected to grow in Europe in the future;
Figure 2 shows how road toll systems in particular are likely to evolve;
Figure 3 shows a first example of system of the invention;
Figure 4 shows a second example of system of the invention;
Figure 5 shows a vehicle used in the system of the invention;
Figure 6 shows the system of the invention in more detail; Figure 7 shows a first example of information flow within the system of the invention;
Figure 8 shows a second example of information flow within the system of the invention;
Figure 9 shows a third example of information flow within the system of the invention; and
Figure 10 shows a fourth example of information flow within the system of the invention.

The invention provides a road toll system in the form of a vehicle-mounted unit having a satellite navigation receiver implementing a position tracking function. The system determines the routes taken by the vehicle based on the position tracking information, and has an authentication system for validating the position information from the satellite navigation receiver.

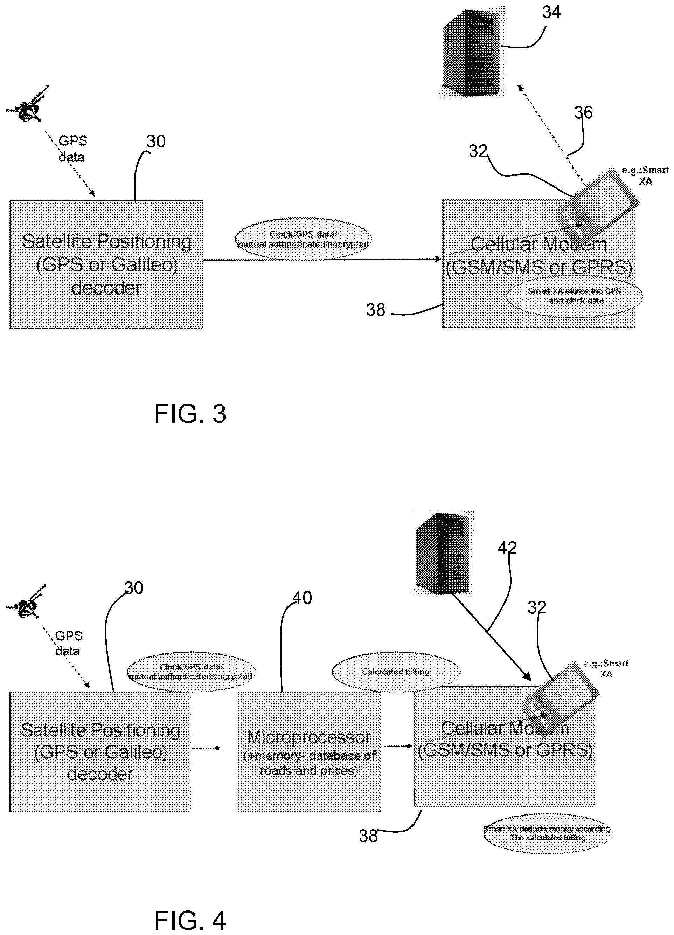

Figure 3 shows a first implementation of road tolling system which can incorporate the validation system provided by the invention. The example of Figure 3 is based on an off-line minimal client system for infrastructure-less road tolling.

GPS data is captured by the GPS receiver 30. This data is decoded to position data (longitude-latitude). The position data together with timing (clock) data is stored in memory 32 in the form of a Smart card (Smart XA). Periodically a batch of stored data is sent to the back-end road tolling server 34, as shown by the batch download 36. This can be ideally done by a GSM function (General Packet Radio Service "GPRS" or Third Generation mobile telephony "3G") using a cellular modem 38. The back-end server is able to reconstruct out of this data the journeys that are driven.

The server also contains a database of road prices which were valid at a certain time. Finally the total price is computed and the driver gets an invoice (e.g. monthly).

The needed memory size of the Smart card can be calculated based on average data shown below:

| km/year | 100000.0 |
| No. days/year | 200.0 |
| No. hours/day | 8.0 |
| average km/h | 62.5 |
| 1% accuracy (m) | 625.0 |
| Max distance between GPS fix(m) | 312.5 |
| No. sec between two fixes | 18.0 |
| No. fixes /month | 26666.7 |
| Bytes/GPS fix | 4.0 |
| Min needed memory/month (Kbyte) | 106.7 |

If the total income from road tolling is to be approximately the same as the actual tax income from existing taxation, the average cost/km is very small. Each journey is thus very small, which means a continuous on-line transaction scheme may not be desirable, hence the desire for a batch download.

This type of transaction scheme is much in line with current known electronic purse schemes used by the banking world.

There are variations to this basic configuration.

Firstly, it is possible not to store raw GPS data, but to store the decoded position information. This reduces the storage requirements and the batch transfer volume.

The system can be modified to enable the user to obtain the actual price information of the road he is driving. This could be obtained by using a real time on-line enquiry system and data transmission. For example, pushing a price request button will send the latest GPS coordinate to the server, and the server responds with road price, which is then displayed to the user. This provides a low cost service.

With simple GPS laboratory equipment, a fake transmitter can be built that can be mounted in the neighbourhood of the receiver. This transmitter will send out fake data. This attack should be avoided, and this invention provides validation of the GPS position with other independent information collected by the vehicle, which in this description and claims is termed a "local vehicle condition".

The type of information which can be used to validate the GPS data can be placed into two categories; internal and external. Internal signals are in the form of vehicle-mounted sensor signals. The local vehicle condition can then comprise the motion of the vehicle or the local environmental conditions.

In order to detect the motion of the vehicle independently of the GPS system, a number of parameters can be used, derived from existing vehicle equipment and sensors, such as:

the vehicle speed;
the vehicle steering angle;
the vehicle distance travelled;
the fuel tank level.

Information of this type can be used to estimate a change in position over time. These signals cannot make any estimate of absolute vehicle position, but they can be used to verify that the difference between satellite receiver signals separated in time is consistent with the detection vehicle motion. Thus, a short range position change can be calculated, starting from a first GPS position fix. A subsequent GPS position fix can then be validated if the GPS data indicates a vehicle movement which is consistent with an analysis of the internal signals.

In order to detect the local environmental conditions, again a number of parameters can be used derived from existing (or additional) vehicle sensors, such as:

rain detection;
temperature;
ambient light levels;
the vehicle headlight or tail light output.

The environmental conditions can be used to verify that the time and position encoded in the GPS signals is consistent with the environmental conditions measured. For example, fake GPS signals may be used to indicate that it is night time (when road tolls are lower) and this will be inconsistent with consistently high ambient light levels. Similarly, a fake GPS signal may be used to indicate location in one area, and this may be inconsistent with the weather recorded at the actual vehicle location.

External signals are in the form of independent signals associated with the surroundings of the vehicle. As a main example, the local vehicle condition can comprise wireless signals broadcast in the vicinity of the vehicle.

Wireless signals which can be detected may include:

RDS (radio data system) signals of FM radio transmissions;
SI (service information) data on DVB (digital video broadcasting) or DAB (digital audio broadcasting) broadcasts;
cellular base station signals;
radio signal levels at predetermined frequencies;
naval and avionic signals;
WiFi access point signals.

The existing radio receivers of the vehicle can be used to collect information concerning the radio signals that can be detected, and this information can again be correlated with the position derived from the GPS signals.

Some of the signals identified above can contain implicit or explicit information about the position and time. For example RDS data includes time, transmitter name and TMC (traffic message channel) data. The TMC data includes information about specific incidents which also correlate to a known time. SI information in a DVB broadcast will correlate to a region within a certain range of the identified transmitter and the current time.

As shown in Figure 3, the system already has a mobile telephony receiver, for receiving cellular base station signals. The mobile telephony receiver can implement a position tracking function (by trilateration of multiple signals from multiple base stations), and this can provide an accurate location for use in validating the GPS position.

It will be appreciated that the use of two (or more) sets of independent data with correlation to provide validation of the GPS data increases the complexity of any fake signal attack.

The various approaches above can be combined, and indeed as much information can be gathered as possible to enable the validation to be implemented, based on the data available at any particular time.

The sensor data can be stored periodically in the same memory as the GPS data, and provided as part of the batch download. It is thus simple to group the GPS signals and the other sensor signals which were taken at the same time. The server 34 then analyses all data received, both to implement the toll billing operation as outlined above, and also to perform a validation of the GPS positions recorded.

There are concerns about the privacy of data stored in road toll systems. In the example of Figure 3, the system stores and transmits combinations of GSM, GPS and personal identity data to a central server system. Maintaining privacy protection means the security needs to be at a total end-to end system level, including the server infrastructure.

The system of Figure 3 is based on post payment. Non-payment in such a system will only be noticed after a while. Indeed, the server only calculates batched data after a certain period (e.g. monthly). Invoices have to be sent and a payment period has to be given. In the case of non payment, 1 or 2 warnings have to be allowed. It can be seen that half a year for example will pass before action can be taken.

However, an advantage of the post pay system is that the client system requires very little processing, which will lead to a very low cost solution. The accuracy of the billing can be guaranteed by the server software and can be averaged and compensated over a long time period taking into account the previous intermediate results.

It is of course also possible to implement a prepayment system.

A prepayment system is shown in Figure 4.

The GPS data is again captured by the GPS receiver 30. This data is decoded to position data (longitude-latitude). The position data together with timing (clock) data is sent to a microprocessor 40.

The microprocessor environment contains the database of roads and related prices. Thus, it can calculate the related cost of actual driving. This cost data is deducted from the prepay amount stored in the Smart card 32.

The data update of prices and roads is uploaded from the back-end server 34 transmitted over GSM (GPRS-3G) as shown by upload 42.

In order to assure that data is not tampered by the user, data again is exchanged in cryptographic way (e.g. DES are 3DES) between the various elements. Databases and pre-pay information are kept in the Smart card environment.

The smart card environment can also take up the role of deducting the amounts, or even performing the full microprocessor function. This is the ideal tamper resistant implementation.

This implementation requires the road and pricing data to be stored locally, but a complete database of roads and prices is not needed. In most cases, the car drives in a certain area (less than 50 or 100km radius). This means that only a limited amount of road data has to be stored and updated. Eventually only frequently used roads can be stored.

Additional road information can be requested from the server and uploaded if the system detects GPS conditions outside the stored road information.

Pricing information will remain static for a long time for most roads. Updates may only be more frequent for highways/motorways. These updates may only happen at fixed times so they can be predicted. If prices change, updates can be delivered via the GSM system.

In order to avoid attacks on the client, tamper resistance is again crucial. The Smart card environment is already a good countermeasure. A level 3 to 4 FIPS or Common Criteria security level may be required, which most Smart cards meet. This reflects the fact that the transactions are of small amounts ("micro transactions").

Other attacks are related to probing or changing the data on the interfaces between the various components (GPS-Microcontroller-Smart Card)

This may be countered by incorporating the whole computing function into the Smart card and interfacing the Smart card through the existing SIM interface of the GSM unit. This provides a road toll SIM card. Communication between the GPS system and the SIM card can be based upon simple DES are 3DES encryption.

Further fraud countermeasures can be on product level or on subassembly level. The availability of an ultra fast interrupt that, upon activation, clears a part of memory or registers (e.g. key reference registers) is one approach to enable equipment makers to assure advanced countermeasures for tampering. A battery back up is needed to be able to initiate such interrupt action.

The Smart card prepayment system can operate much in line with known payment schemes for pre-pay phone cards. In this case, the driver needs to buy 'miles in advance'. The client unit in the vehicle then deducts money for every mile driven. This implies that the client needs to know the actual price of the road.

This requires additional processing power as the vehicle unit must calculate the cost in addition to implementing the position tracking.

An advantage of this system is that the privacy is increased. In order to implement the validation of the GPS position, some data still needs to be sent to a remote server. However, this may be much less frequent samples of data to allow the validation to be performed.

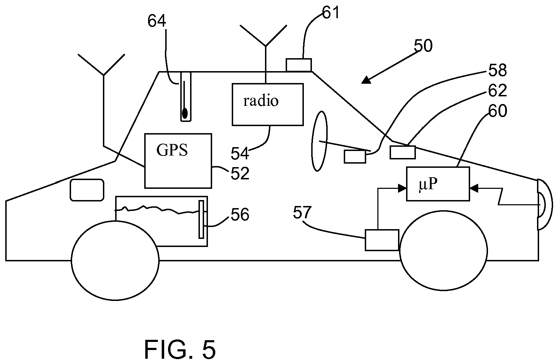

Figure 5 shows a vehicle 50 with the various sensors that can be used in any combination to provide validation of the GPS position recorded. The GPS receiver is shown as 52, and the GSM receiver is shown as 54. However, the receiver 54 includes the FM radio receiver and a receiver for any wireless signals which can be received at the vehicle's location.

The fuel tank gauge is shown as 56, and the wheel sensor as 57. In conventional manner (for new vehicles) all this information is already provided to a processor 60, which continuously calculates vehicle speed, fuel usage, distance etc. The headlamp status is also shown as provided to the processor 60. An ambient light sensor 61 and a rain sensor 62 are also shown. The various sensor signals can be used in the manner explained above.

The use of a Smart card to provide a secure processor environment enables additional advantages and features to be obtained, and these will be discussed below.

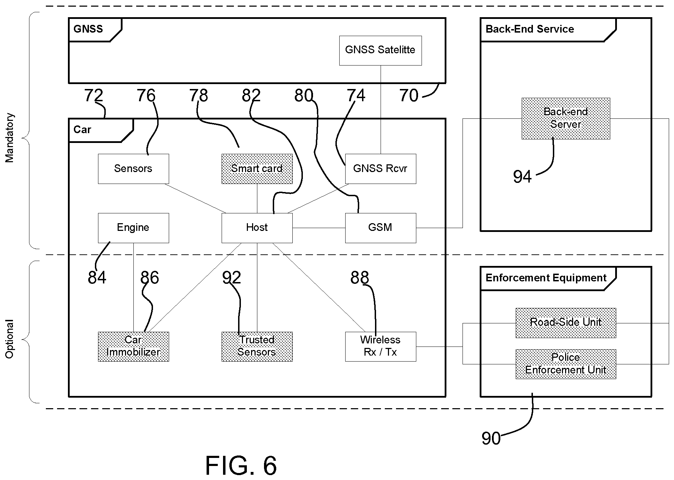

Figure 6 gives a functional overview of a secure correlation-based road pricing enforcement system using a smart card.

The satellite system (GNSS) is shown as 70, and the on-board equipment is shown as 72, including a satellite receiver 74, sensors 76, the smart card 78, the GSM mobile telephony system 80, and the main processor 82. The vehicle engine is shown as 84.

Optional features for increased security include the car immobilizer 86 and a wireless communications system 88 for communicating with roadside beacons or police enforcement systems 90.

Additional "trusted" sensors are shown as 92. These are sensors which are part of the vehicle as manufactured with built-in tamper evident features.

The on-board equipment communicates with a back end server 94 using the GSM system 80.

In the overall system, the trusted parts of the system are shown shaded, namely the smart card 78, back end server 94, car immobiliser 86, trusted sensors 92 and police enforcement system 90.

Even though the smart card is considered a very secure tamper-resistant device, it is not possible to design a system that can prevent tampering of (raw) GNSS data in a secure way. Instead, the smart card can be relied on to build a tamper-resistant secure framework that will:

(i) detect frauds (tamper-evidence) and
(ii) will react appropriately (tamper-responsiveness) to these frauds.

The main purpose of this security framework is to guarantee the correctness of GNSS data collected by the on-board unit (OBU). However, the same framework can also be reused to enforce other security policies relevant to the road pricing application or to other telematics applications in general.

The security framework is split into different elements, running continuously and in parallel. A generic description of each element is given below.

(i) Recording of events

In this phase, all relevant events are submitted to the smart card that then collects them and stores them in a secure way.

There are different categories of events. First, there are data events. These are events corresponding to the collection of data coming from the GNSS receiver, the internal (trusted or untrusted) car sensors, and/or from the external signal receivers. Second, thee are process events, corresponding to the outcome of processes running within the OBU environment (e.g. GNSS data integrity checks, OBU integrity checks, results of interaction with enforcement units...).

The smart card provides several mechanisms to implement this phase:

*Event freshness and integrity check*

The smart card provides interfaces that allow for verifying the freshness and integrity of events coming from trusted sources (e.g. data coming from trusted car sensors, or data/process coming from external enforcement units). Only events that pass the freshness and integrity checks are accepted and recorded by the smart card . A typical implementation for integrity checks is to verify signature on events data using state-of-the art cryptographic algorithms. Freshness verification is typically implemented using challenge-response protocols.

*Event submission authentication*

The smart card provides interfaces that allow for signing events that have been submitted to the smart card (and when relevant have passed the freshness and integrity checks). The back-end system only accepts events that have been signed by the smart card. Such valid data are required by the smart card in order to compute the road pricing fee to pay for a given period. When the back-end server doesn't receive signed event data within that period of time, a fraud is suspected. This prevents a potential attacker from withholding submission of these events to the smart card, and hence escape fraud detection checks implemented in the smart card.

*Secure storage*

The smart card provides interfaces that allow storage of all submitted events in a secure way. The event information can be stored within the tamper-resistant environment of the smart card, hence preventing modification and deletion of these data. This method of storage is very well suited to store counters, and flags that are maintained by the smart card to describe the current security status. An alternative implementation is to store the data in a memory outside the smart card environment and to rely on the event submission signature to detect modification of these data. In that case, the smart card also includes extra information in the event submission signatures, such as counters that allow to detect in a secure way the deletion of such data.

*Secure time tracking*

Time is a paramount parameter for correlation-based enforcement. The smart card provides interfaces to keep time information associated with each event in a secure way. The smart card has a secure time clock and associates the clock value to each submitted event in a secure way. Alternatively, the smart card manages a secure counter that is regularly incremented between each event submission, and associates the value of that counter to each submitted event. Alternatively, the smart card offers one or more time tracking interfaces enabling the host processor to tell which set of events occurred simultaneously, and to tell in a secure way in which sequence these events occurred, and to store this information in a secure way, for later reuse by the correlation-based enforcement.

(ii) Fraud detection

The smart card may provide interfaces implementing correlation-based integrity checks to verify integrity of submitted event data, and in particular to verify integrity of the GNSS data.

Additionally the smart card may also provide security services that enable integrity checks to be performed on the functioning of the OBU, based on the collected events, and reports the results of these checks to the back-end server in a secure way.

(iii) Transmission of events

The smart card provides interfaces to transmit all submitted events to the back-end server in a secure way. This allows the back-end server to perform correlation-based integrity checks or verify checks performed by the smart card. The transmission of data is designed such that data are deleted in the smart card memory or in the external storage memory when the back-end server has acknowledged correct reception of these data.

The smart card provides interfaces to enable the back-end server to query information on the current security status in a secure way.

(iv) Reaction to fraud

The typical reaction when a fraud is detected is to trigger legal proceedings against the suspected attacker that can then lead to warnings, fines and/or convictions. In the system depicted in Figure 6, only the road pricing back-end server 94 (or indirectly enforcement units 90 such as road-side units or police enforcement units) has the capability to trigger such reactions. Without interaction with these external trusted devices, the smart card has no means to trigger these reactions. The main role of the smart card is then to be a trusted witness, namely a trusted agent of the back-end server that will monitor in a secure way all events occurring within the OBU environment and report securely these events to the back-end server.

However, when a car immobilizer is present, the smart card may also implement a fraud reaction mechanism. In that case, the car immobilizer 86 requires a secure authorization code coming from the smart card in order to authorize the starting of the car engine 84. The smart card generates this code only when there was no fraud detected during previous trips.

(v) Privacy support

The smart card provides interfaces to limit the privacy-sensitive information sent to the back-end server while still maintaining a high-level of security. The smart card only returns the status of integrity checks on event data it has performed, without disclosing the data themselves.

The security mechanisms explained above are detailed further in two example implementations.

In a first example, the smart card is powerful enough to perform most of the fraud detection processes (correlation tests, integrity checks). The second example illustrates the case of a more lightweight smart card where most of the fraud detection process is delegated to the back-end server, and where the smart card only implements basic integrity tests. An actual implementation may however use mechanisms from both examples.

The first example of implementation using a powerful smart card chip will first be described.

The complete on-board unit processing can be performed within the smart card processor itself. In that case, the decoded GPS position, the sensor data, including car sensors data, environment sensor data and external signal data, are fed into the smart card, which then performs the necessary correlation-related checks in order to verify the integrity of the GPS data.

The basic security model relies on the fact that the smart card offers a very secure and tamper-resistant environment that prevents any potential attacker to tamper with the data processing. Moreover, thanks to the correlation with multiple sources, the attack is made more complex since the potential attacker must simultaneously tamper with several sources of data in a consistent way.

The smart card compares the received GPS data to data coming from the various sensors to evaluate the level of correlation. The processing depends on the kind of data to correlate with:

*Linear correlation* - this applies to sensor data such as fuel gauge level or odometer feedback. In that case, the smart card simply computes the linear distance made by the car from the GPS data (using formulas well-known in the state-of-the-art), and compares this distance with the odometer value or gauge level (taking into account some proportionality factor α, which can be negative in the case of a sensor such as the fuel gauge).

$$| D_{GPS}(t) − α * D_{sensor}(t) | \leq max\_limit$$

Fraud is suspected if the difference exceeds a limit. This limit is a system-defined parameter that compensates for unavoidable mismatches between the GPS and sensor systems. The limit translates the trade-off between increasing the probability of fraud detection and reducing the rate of false positive.

The system may be improved further. First, the smart card may reset the distance operands to zero. Such resets can be initiated by the system for example when fraud was detected and reported, or because the difference was due to slow drift between GPS and sensor data. The reset can be initiated by the smart card when there is a sudden change in sensor values (e.g. when refueling the car):

$$| (D_{GPS}(t) - D_{GPS}(t_0)) − α * (D_{sensor}(t) - D_{sensor}(t_0)) | \leq max\_limit$$

Second, the system may be designed so that the parameter α is automatically adapted to counterbalance the drift that can occur between GPS distance and sensor distance. For instance, in implementations where the distance operands are regularly reset to zero, the new value of α to use for the next period can be computed according to formula: $α_i = (D_{GPS}(t_i) - D_{GPS}(t_{i-1})) / (D_{sensor}(t_i) - D_{sensor}(t_{i-1}))$. For more security, the system may however require that the value $α_i$ stays within some interval, beyond which a fraud is suspected. Such automatic adaptation of the proportionality factor is particularly used for sensors that have variable dependency on distance, such as the fuel gauge. This mechanism can also be used so that to better tune the factor α, in order to use smaller threshold max_limit, and hence increasing fraud detection without increasing the rate of false alerts.

*Differential correlation*

This applies to sensors such as the tachometer (speed) or steering angle, and rely on the comparison of change in the position information between the GPS receiver and the reference sensor data:

$$| V_{GPS}(t) − α * V_{sensor}(t) | \leq max\_limit$$

where $V_{GPS}$ is either the derivative with respect to linear position (linear speed for correlation with the tachometer), or with respect to angle (curvature for correlation with the steering angle). Alternatively the correlation can also be based on the variation of the position:

$$| ΔP_{GPS}(t) − α * ΔP_{sensor}(t) | \leq max\_limit$$

Differential correlation is very sensitive to detect a peak of differences between GPS and measurement from the sensors. It is very effective to detect desynchronization between events measured by the GPS and those measured by the sensors (e.g. the driver turning the wheel or accelerating). Such desynchronization is indicative of an attempt of fraud (e.g. taking a different exit on a roundabout than the one reported through GPS feedback).

Noise may however have unwanted effects, and may force the "maxjimit" parameter to be set to a relatively high value to reduce the rate of false positive alerts. This problem can be solved by filtering first the input operands using very simple techniques such as low-pass filtering or moving averaging.

*Position correlation*

This applies to correlation with sensor data that gives absolute position information. In that case, the correlation check is done by verifying that the distance between GPS and sensor position remains within some predefined limit:

$$| (P_{GPS}(t) - P_{GPS}(t_0)) − (P_{sensor}(t) - P_{sensor}(t_0)) | \leq max\_limit$$

As for linear correlation, operands in the comparison can be reset at regular intervals and/or on request from the system in order to cancel drifts that could occur between the two different positioning systems.

Also, checks similar to those for differential correlation can be implemented as well, e.g. by differentiating the speed (or curvature) from $P_{GPS}(t)$ and $P_{sensor}(t)$ and comparing the result.

The correlation processing doesn't directly depend on the type of source data. For instance, the smart card may apply differential correlation even though the source sensor data gives absolute position.

The smart card detects and reports the status of the correlation checks to the system in a secure way. The main requirements are message authentication and integrity (to identify source OBU and prevent message tampering), and message freshness (to prevent replay attacks). Many implementations exist in the state-of-the-art; they mainly consist in the use of secret cryptographic keys that are securely stored within the smart card environment, and timestamps, random challenge, nonce, and/or counter in secure protocols.

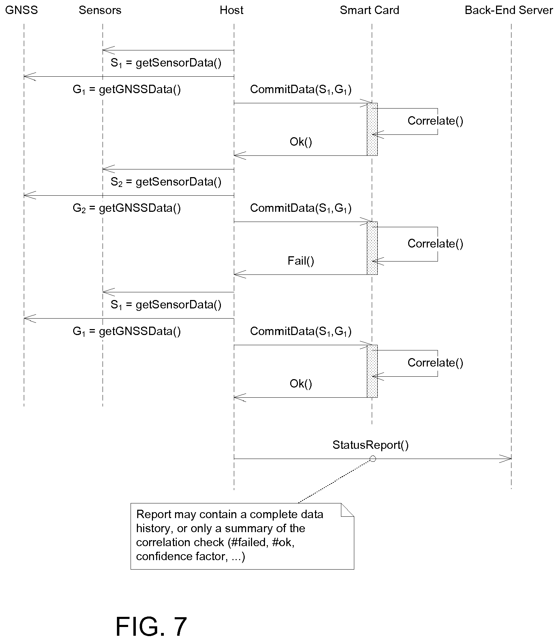

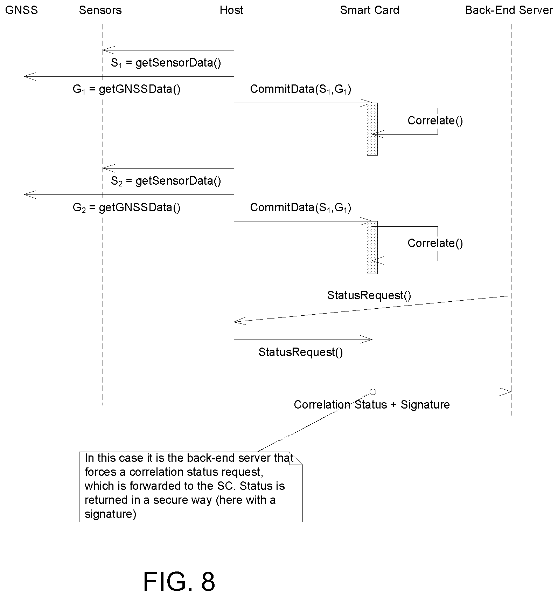

Figures 7 and 8 show two examples of reporting system.

In Figure 7, the main processor ("host") retrieves sensor data ("getSensorData") and GNSS data ("getGNSSData"), and provides this to the smart card ("CommitData") where the correlation ("Correlate") is performed. The result of the correlation check ("OK" or "Fail") is then reported to the main processor. In the example shown, there are a number of such correlations (three shown in Figure 7) before there is a status report ("StatusReport") to the back end server. This report can be a complete history, or a summary.

In Figure 8, the main processor ("host") again retrieves sensor data and GNSS data, provides this to the smart card where the correlation is performed. The result of the correlation check is only reported when there is a request ("StatusRequest") from the back end server. The host then provides a status request to the smart card, and signs the result before returning this to the back end server.

Thus, it can be seen that the smart card may report the result of correlation tests continuously to the system, or may store these results in secure memory and report them in batches at preset intervals. Alternatively, the system may request the smart card to report the current status at some random time, or the smart card may force the report of correlation status information when fraud is detected.

The smart card may report the result of each correlation check it has performed, or only report the number of checks that were successful (no fraud) and those that were negative (fraud suspected). In case of negative checks, the smart card may also add to the report some context information (i.e. history of GPS data and sensor data) to enable further analysis by the system.

Privacy is a sensitive matter in telematics applications. Thanks to the use of a secure environment such as a smart card in the OBU, the privacy of the driver can be greatly improved while still achieving a high level of security. In this configuration, the smart card is seen as a secure extension of the external system within the OBU environment. Thanks to the tamper-proof quality of the smart card, integrity checks can be performed on privacy-sensitive data in a secure way without the need to disclose these data to an external system.

In the basic configuration, as described above, the smart card only reports the results of integrity checks to the external system. Besides the actual result of these checks (i.e. success/failure), the report may also contain a "correlation factor" for each check, which is the computed difference between the GPS data and the reference sensor data (possibly normalized to the given max_limit). This correlation factor does not disclose any sensitive information but can be used by the external system to compute an overall confidence factor for a given car, or to perform overall system security evaluation and fine tune security.

In order to reduce the amount of information transmitted to the external system and/or to increase the level of privacy, the system can be further improved by implementing a commit & prove protocol. It is assumed that the smart card will contact the external system on a regular basis for transmitting the data necessary to compute the tolling fee. Instead of transmitting the results of correlation check at that moment, the smart card can report on the result of these checks without communicating their actual values. This can be easily implemented by storing the result of these checks (+ input data) in secure storage. The smart card then computes a cryptographic hash on all these checks (and input data), and signs this hash using a cryptographic signature scheme. An alternative solution is to use chained signature schemes. In such schemes, a signature is computed for each check. The signature covers the input data, the outcome of the check, and the signature of the previous check. This means that providing the last signature of the last check is sufficient to report on the value of all previous checks.

The signature is then given to the external system. This signature is very small and discloses absolutely no sensitive information. As such, it doesn't allow the external system to verify the validity of transmitted data, but it forces the sender to report on the value of the data. In order to verify the validity of the data, the system may, on random basis, or according to a scheme that is conformant to local privacy legislation, request the data that were used to compute the signature, and then verify the validity of the data. Since the signature is securely bound to signed data, it is not possible after the report to change the signed data without breaking the signature. It is then not possible for a fraudster that had tampered with the GPS data to escape such verification request without being detected.

In the case of a so-called "thick client" implementation (where the cost is computed within the OBU itself), this mechanism can be extended to the GPS data that were used by the smart card/OBU to compute the tolling fee.

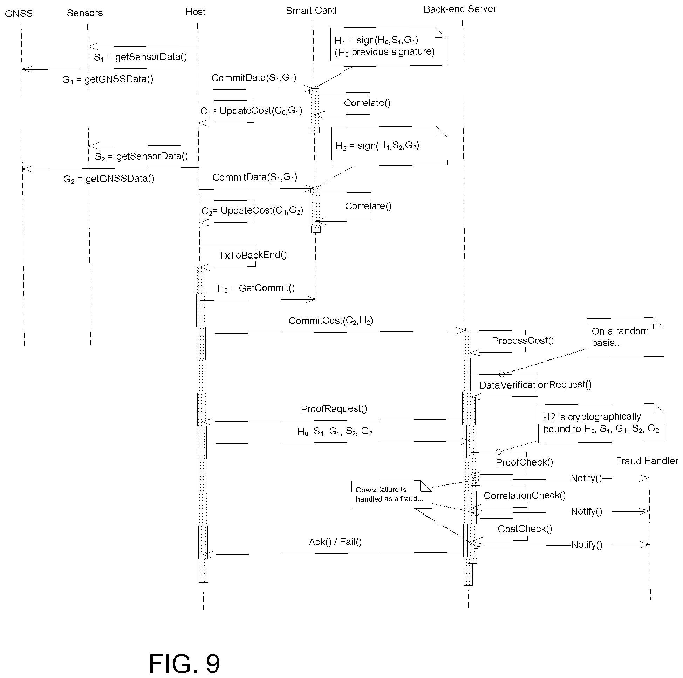

Figure 9 shows an example of reporting system for this thick client implementation.

In Figure 9, the host again retrieves the sensor data and the GNSS data, but also performs cost updates ("UpdateCost"). The smart card not only performs correlation checks ("correlate") but also signs the GPS data (the $H_n$ function shown), and repeatedly performs this signature function.

When a batch download is to be carried out ("TxToBackEnd"), the host obtains the last signed data $H_n$ ("Get-Commit"), and sends the updated cost $C_2$ and the signed data $H_2$ to the back end server.

The back end server processes the cost information ("ProcessCost"), and randomly provides a verification request ("DataVerificationRequest"). The smart card/OBU then transmits the GPS data $G_1$, $G_2$ to the external system, as well as the sensor data $S_1$, $S_2$. The external system can then, besides verifying the validity of the GPS data, also verify the correctness of the tolling fee computed by the smart card/OBU. In order to limit the privacy infringement, the system may provide a means to notify the user that he is requested to provide additional information for enforcement purposes. Such a notification is similar to random police enforcement that could occur along the roads.

The back end server performs the proof, correlation and cost calucations ("ProofCheck", "CorrelationCheck", "CostCheck").

The basic security model relies on the increased difficulty for the attacker to tamper with GPS data and sensor data in a consistent way. It can also be assumed that it is easier to tamper with GPS data than with sensor data. Indeed, a GPS antenna is usually quite exposed, whereas a sensor data bus is usually difficult to access, in particular if the OBU is well integrated within the car environment (e.g. OEM realization), or if tampering with these buses may result in safety issues for the driver, or in liability issues with his insurance company.

This basic security model can however be improved by transmitting the sensor data to smart card/OBU in a secure way. For instance, the odometer or tachometer sensor can be enclosed in a tamper-evident package, and the odometer or tachometer value can be transmitted on the car bus along with a cryptographic signature that protects the integrity of the sensor data. The signature can be generated using a key that is contained within the sensor package. Although it would increase the level of security, it is not necessary that this package is resistant to tampering. It is only sufficient that such attempts can be easily detected by inspection of the sensor box (tamper-evidence), and that it is very difficult for the attacker to restore the box to its original state after tampering. The temptation to tamper with the box can then be deterred by claiming high liability fees to the driver if the box has been tampered with. This verification can be made for instance by insurance companies after a car accident, or by an inspection team during regular car maintenance.

There is more and more incentive to include such "trusted sensors" within the car environment. For instance, trusted odometer value can be used to prevent tampering of the odometer in the second-hand car market. A trusted tachometer can be used to automatically enforce speed limit regulations.

A second example of implementation using a lightweight smart card chip will now be described.

It is assumed that lightweight smart card models are not powerful enough to perform all the correlation tests and OBU processing. In this case, it is assumed that the OBU will contain, besides the smart card itself, a host processor that will perform the main part of the OBU processing (collecting data, possibly computing tolling fee, forwarding data to the server, and so on). In this configuration, a similar level of security can be achieved by considering the smart card as a "secure" witness for the back-end server. The actual correlation checks are delegated to the back-end server, and the smart card is an incorruptible agent that must report all observed events to the server in a secure way.

For this purpose, the smart card provides at least a *Data Signature* interface. This interface can be used by the host processor to delegate correlation-based integrity checks to the back-end server in a secure way. This interface takes one or several samples of GPS or sensor data (or any data), and generates a signature that is given to the back-end server to prove integrity and freshness of the given data. Such signature scheme is well-known in the state-of-the-art.

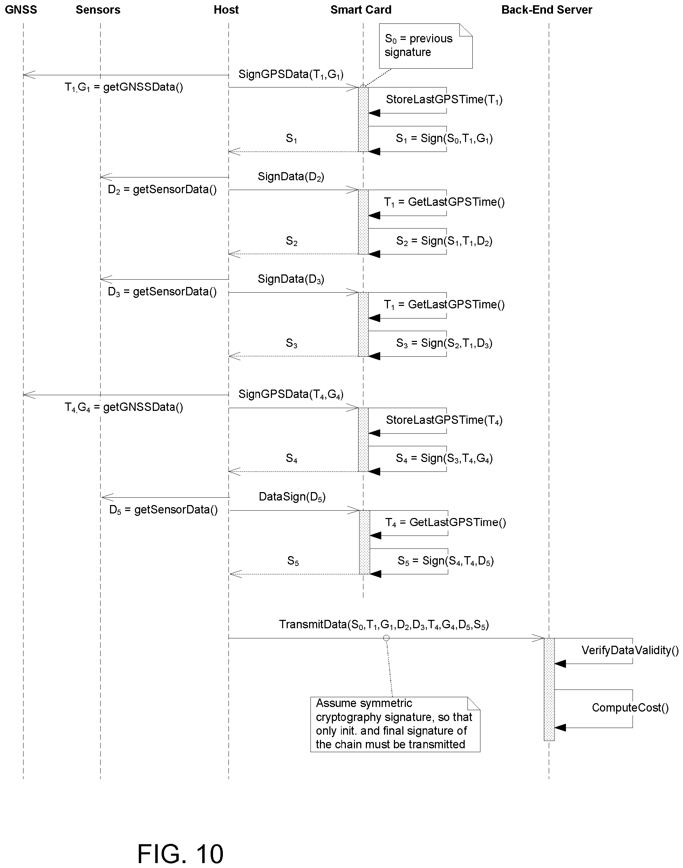

An example of reporting system is shown in Figure 10, and which uses a chained signature sequence, where signature of a previous event is appended to the next event data before generating the signature for that event. Using chaining signature is advantageous when symmetric cryptography is used because only the initial signature and the last signature of the chain must be communicated to the verifying entity (since intermediate signature can be regenerated by the verifying entity).

In this example, the host computer retrieves the GNSS data, and has it signed by the smart card ("SignGPSData"), which returns the signed value $S_n$.

The smart card performs repeated signatures each time new sensor data D or GNSS data G,T is retrieved. The signed data is a function of the most recent sensor data $D_n$, the previous signed data $S_{n-1}$ and the most recent time value $T_n$ obtained from the last GNSS data retrieval.

At a download point in time, the starting signature $S_0$, the last signature, and the sensor data and GNSS data (including time values) are provided to the back end server ("TransmitData") for verification. This verifies the data validity ("VerifyDataValidity") as well as calculating the road toll cost ("ComputeCost").

A lightweight example is to use an algorithm such as SHA-1 or SHA-256 to compute a hash and symmetric algorithm such as 3DES or AES for generating the signature over the computed hash. Ideally the signed key is unique per OBU; also a secure counter that is increased at each signature is appended to the message to sign to guarantee freshness. Other signature schemes, such as asymmetric ones based on RSA cryptographic algorithms, or Elliptic Curves, can be used as well. These schemes also provide non-repudiation, which is interesting in case of liability issues.

Before sending the signature to the back-end server, it is assumed that the data will be stored for some period of time in the OBU. It is not necessary to store GPS and sensor data in the tamper-proof memory of the smart card. It is sufficient to have these data signed using the signature interfaces described above, and store the data and their signature in a memory external to the smart card environment. The signature guarantees that the data can't be tampered with. This scheme allows relaxation of the requirements on the smart card memory size, but doesn't prevent deletion of data. However, data deletion can be detected if the smart card maintains a counter counting the number of signatures generated so far, and provides an interface that returns the value of this counter in a secure way.

In the lightweight example, the smart card simply signs the counter used for message freshness, and returns this signature and the value of the counter. The back-end server can request this counter at regular intervals to detect deletion of data by verifying that this counter matches the number of signatures received so far. An alternate implementation uses a chain of hashes, or chain of signatures, where each newly generated signature depends on the value of the previously submitted signature. In this way, any deletion of data and their accompanying signature will be detected by the back-end server since the back-end server will not be able to verify the signature following the deleted one.

Rather than using a *Data Signature* interface for signing the GPS data as explained above, the smart card may offer a specific *GPS Data Signature* interface. The same authentication service is offered through that interface with the difference that the smart card can also interpret the given GPS data (coordinates + satellite time) in order to enable better correlation checks or to provide extra enforcement mechanisms.

As mentioned, the *Data Signature* interface can be used to record and report any data event to the back-end server in a secure way. Reports in that case include both the data content and the signature. The same interface can be used to record and report in a secure way all process-related events. Alternatively, the smart card may provide a dedicated *Event Signature* interface. This interface manages a set of secure counters that are incremented for each submitted event. These counters are typically stored in secure non-volatile memory of the smart card. Also this interface can be used to generate a signature on the current value of one or more counters for making a secure status report to the back-end server. For instance, the smart card may call this interface internally to store and report in a secure way the results of integrity checks that it has performed internally.

Time-related information is also verified, recorded and signed by the smart card. In a first variant, the smart card uses a built-in secure clock circuit. In that case, the smart card also appends the time of signature (from its internal clock) to the data to sign in the *Data Signature* interface. This time will be then be used by the back-end server, for instance to check correlation between GPS data and tachometer data (speed). Used in conjunction with the *GPS Data Signature,* the smart card can read the time information included in the GPS coordinates, and before signing submitted data, and compare this value with the value of its internal secure clock. If both values are not within an acceptable range, a security counter is increased to notify fraud (e.g. through the *Event Signature* interface).

In another variant, the smart card can start an internal secure timer at power-on. Maintaining such a timer is much easier than implementing a secure clock. The value of this timer is then signed and appended to all signatures generated by the aforementioned interfaces. In order to distinguish from timer value from one session to another (since the timer is reset after each power-on), a persistent counter is also maintained by the smart card in non-volatile memory, and incremented at each power-on, for instance by calling once at boot time the *Event Signature* interface. Used in conjunction with the *GPS Data Signature* interface, the smart card may compute the delay between the two last submitted GPS coordinates, and compare this with elapsed time as measured through its secure timer. Fraud is suspected if values are too different.

Also using the secure internal timer, a secure clock can be implemented, using known techniques in the state-of-the-art. For instance, the host processor can notify the smart card that it is going to request the current time from the back-end server. The smart card reacts by registering the current value of the timer. On reception of the request, the back-end server signs the current time, and communicates the result back to the host processor, which forwards it to the smart card. The smart card verifies the signature, and using its internal timer computes the delay between request and response. This delay is stored along with the received time; the delay is an indication of the accuracy of the current time.

Finally, in the absence of a secure clock or a secure timer, or in addition to them, the smart card may, in conjunction with the *GPS Data Signature* interface, store the value of the time information contained in the last submitted GPS coordinate, and mandate that the time information for the next submitted GPS coordinate be higher, or better yet, be strictly higher in order to force flowing of time (e.g. if the system probes GPS front-end once every second, the smart card may require the GPS coordinate time value to be different by at least 0.9 second). This mechanism can also be reinforced by using and correlating with another source of time information. For instance, the smart card may offer an interface to correlate with the time information coming from the GSM network.

Also, whenever the smart card signs an event (using one of the above signature interfaces), the last submitted GPS coordinate time is appended and signed together with submitted data, hence interleaving the GPS stream with other data stream (sensors, integrity check events...). The back-end server can use this information to perform correlation-based integrity checks of the GPS data. For instance, the GPS stream can be interleaved with information coming from the GSM receiver (correlation with GSM network). The Cell ID as well as the GSM time can be signed with the Data Signature interface. Later on, the server can use this information, and request confirmation from the network operator.

This mechanism doesn't prevent in itself that interleaved events be deleted. For this purpose, the smart card may manage an internal counter that is incremented for each signature generated by any of the aforementioned signature interfaces. This counter is appended to the data before signature and stored along with the data. The back-end server uses this counter to check that reported events where indeed recorded in the given sequence and that there are no-missing in-between events (Event "Sequentiality" Proof).

The security of the scheme can be further increased if the car environment also contains secure sensors (like a secure odometer) that can send secure sensor data to the on-board unit through a car communication bus. In that case, the signature of GPS data by the smart card can be made conditional on reception of genuine sensor data at regular intervals. Secure exchange of this sensor data relies on state-of-the-art authentication and data integrity protocols that can be easily implemented in a lightweight smart card, for instance using challenge-response protocols. In the implementation example above, the smart card must first execute such challenge-response protocols with the secure sensor before allowing each request of GPS *Data Signature.* This way an extra guarantee is given on the simultaneity of GPS data and sensor data.

The presence of the smart card also improves interaction with enforcement units (such as road-side units or police enforcement units). Indeed, in a basic implementation, the road side unit (RSU) simply detects passing cars and attempts to connect to the car OBU to verify that it is present and active. In order to prevent tampering during the communication, a secure communication channel is setup between the RSU and smart card in the OBU. The proof for presence and activation can be for instance given by having the smart card signing a random challenge from the RSU using a key for which the RSU can verify the signature (e.g. either pre-shared key or PKI infrastructure). In the case the proof is incorrect, or if the RSU doesn't receive an answer within a specified delay, the RSU takes a picture of the car license plate and forwards this picture to police enforcement units.

An attack on the previous setup however is that although it proves the OBU is active, it doesn't prove that the GPS data used by the OBU are correct, nor that the OBU is indeed collecting such data. To counter this, a typical solution in the so-called "thin client" scenario would be to record the ID of the detected OBU, and submit this ID to the road pricing back-end server for a correlation check (i.e. see whether the OBU indeed reports to be present close to the RSU at that given time). Such a solution is not conceivable in a "thick client" scenario due to the infringement on privacy.

The above *GPS Data* Signature can be used to solve this problem in an elegant way. For this, the smart card can have a temporary storage memory that shall store one or several of the last GPS coordinates submitted to the smart card using the *GPS Data* Signature interface. Each time the smart card receives an activity proof request from a RSU, the smart card sends these coordinates to the RSU in a secure way. The RSU verifies then the correctness of the OBU GPS data by comparing these coordinates with its own coordinate. The security proof relies on the fact that the only way to pass the RSU enforcement test is to submit correct GPS coordinates to the smart card and that all GPS coordinates submitted to the smart card always get reported to the back-end server (or otherwise it will be detected by the back-end server as a missing event in the GPS data event chain). Also, the driver's privacy is respected since the OBU coordinates are not submitted to an external server. The same technique can also be used in the thin client scenario in order to reduce load on the back-end server.

Sending several of the last GPS coordinates provides a counter attack where an attacker selectively activates the OBU based on the detection enforcement request coming from enforcement RSU. However this countermeasure can be further simplified. Indeed, thanks to the tamper-resistance of the smart card, part of the process can be delegated to the smart card, hence reducing the processing load of RSUs that have to check many cars simultaneously. To do so, the smart card maintains in a secure way a counter indicating the number of GPS fixes received before the last interruption (.ie. power loss, or GPS signal loss). Each newly submitted GPS coordinate using the *GPS Data Signature* is compared with the last GPS coordinate, and the counter is incremented only if both coordinates are distant by at most a maximum reasonable value.

This reasonable value is defined based on the vehicle max. speed (e.g: max 100m/s) and/or acceleration (e.g: max 10m/s more than previous speed measurement), and the frequency of GPS coordinate probing (eg. 1 fix every second). If the distance is too big, an interruption is assumed and the counter is reset back to 0. On reception of a verification request from the RSU, the smart card sends the last submitted GPS coordinate and also the value of the counter. The RSU then checks that the last GPS coordinate is within a reasonable range of the GPS coordinate of the RSU itself, and the counter is greater than a predefined threshold value (for instance a threshold value of 30 for GPS frequency probing of 1/s would require to have the GPS active at least for the last kilometer for an average car speed of 120km/s).

If the smart card also has access to a secure clock, or to a secure timer, or maintains a variable containing the last submitted GPS coordinate time, the enforcement check can be further improved by also storing the time of the last GPS signal interruption (i.e. measuring GPS activity time since last interruption). In that case, GPS signal interruption is either detected based on the computed distance between two consecutive GPS coordinates, or if there is a too big leap in time between these two coordinates. The time of the last GPS signal interruption is then sent to the enforcement RSU, which then also compares it to a minimum threshold value.

In order to reduce the rate of false positives that would be due to temporary lack of GPS signals in the neighborhood of the enforcement RSU, the RSU may also compare the data from a given car with those of other cars in the same time period. A temporary GPS shortage in the area of the enforcement RSU would mean that all or most cars will report incorrect GPS data and/or will report counter or GPS activation time that are below the threshold values. The enforcement system may use this information to detect a global GPS failure and not proceed with penalties if the rate of verification failures is too high.

Alternatively, if the RSU has an embedded GPS receiver, it can also suspend penalties if it detects a global GPS failure (for instance by comparing the output of its GPS receiver to a reference value).

The use of GSM positioning is mentioned above as one source of external signal for correlation. This assumes that the road tolling operator has a cooperation agreement with the mobile network operator, since only the latter has the knowledge of the position of all cell antennas and this information is required to perform trilateration.

However this basic mechanism can be extended further. Indeed the road tolling on-board unit can collect all base station IDs in its vicinity and transmit this information to the road tolling server along with the current car position as given by the GPS front-end. The road tolling server can then infer the position of each base station by computing the average positions of all cars reporting the same given base station ID. This mechanism is a kind of self-learning map mechanism, which is robust in time since it can adapt automatically to changes in the mobile network infrastructure. This mechanism doesn't require any cooperation agreement with the mobile network operator.

The use of RDS/FM/SI/SI signals follows the same principle as the extended trilateration scheme explained above. The on-board unit captures a unique ID from these signals, and transmits this ID to the road tolling server along with its current position information. The road tolling server collects this information first to build automatically the localization map of all these signals. When the map is built, the server can then verify the integrity of GPS information for a given car by correlating with this map.

It should be noted as well that with future software radio, it becomes increasingly easy to capture all information in a few line of codes.

A typical example of Naval/Avionic signals is the VHF Omnidirectional Range (VOR) standard. This signal contains a phase signal, an antenna ID, and the position of the transmitting antenna. Thanks to the phase signal, the on-board unit can infer very accurately the direction of the emitting antenna. The on-board unit can use this information to verify that the GPS information coming from the GPS front-end is indeed consistent with the direction of the received VOR signal.

This mechanism can be extended further if two or more VOR signals are received. In that case, the on-board unit can compute very precisely its current position, and compare this result with the one coming from the GPS front-end.

The Smart card used in the examples above can simply be for deducting miles and not for other services. However, the use of a more general electronic wallet would allow the user to use the value for additional services.

The enforcement can be stationary, or mobile. In either case, photographic capture of the car license plate is made. A DSRC (Dedicated Short Range Communications) system is a potential technology, and DSRC applications are being developed for interrogating an OBU (On Board Unit). For example, if a car passes an enforcement control point, a picture is taken of the license plate and the time is registered. This information is sent to the enforcement office, where the license plate is linked to the Smart card ID.

Combining the enforcement office GPS data and the Smart card ID can reveal if the on board unit was valid or not at the moment of control. More advanced interrogation would require more real time processing with additional queries sent to the OBU via GPRS (General Packet Radio Service).

Precautions should be made that the enforcement system can be proven to be calibrated at the time of interrogation.

In the road tolling system described, all infrastructure is available to perform a direct on line payment with a clearing service.

The payment application is a separate software application residing in the Smart Card (for example a Java multi-application card). The communication to the clearing house is then done via the GSM infrastructure. The value on the card can be a road toll value rather than a real monetary value. In this case, the loading of payment into the card is made by prior registration. The use of electronic cash (e.g. the Netherlands electronic cash system known as "Chip-Knip Proton") is also possible. A real monetary value is stored on the Smart Card.

Storing electronic cash on the system would allow the payment for potential third party services (e.g. location based services) on the fly.

There are a number of likely requirements of any road toll system, and which can be met by the system of the invention.

The system will need to be governmentally imposed, and this will lead to the need for a certification of the unit that will be sold on the market by an authorising body.

Both legacy and OEM solutions are required to enable competition and retro-fitting. This means that system solutions should be easy to install (preferably no installation need). If installation is needed, tailor made solutions may be required for every brand of car. Installation can then be done in after sales service for cars that are already in the market. For new cars, production line or OEM fit solutions are possible.

The billing accuracy will typically need to be within 1%. The road tolling is likely to be on a long periodic basis (half a year, or 1 year) which allows averaging of deviations.

The privacy and security issues are of paramount concern, and these issues are discussed above. A prepay system will more easily meet privacy and security concerns.

The pricing structure needs to be dynamic and upgradeable.

The pricing information must be known to the user, but it is assumed above that some action can be required of the user to have the pricing structure presented.

A system is likely to be structured so that average income for the state per year and per driver is comparable with the income generated by existing taxes.

The systems outlined above can meet these requirements. Various additional features and modifications will be apparent to those skilled in the art.

**Claims**

1. A road toll system comprising a vehicle-mounted unit having a satellite navigation receiver (52) implementing a position tracking function which encodes time and position into GPS signals, wherein the system further comprises:

    means (34;40) for determining the routes taken by the vehicle based on position tracking information given by the position tracking function;
    two or more sensors (54,56,57,58,60,61,62) for detecting local vehicle conditions which are independent of the satellite navigation signals; and
    means for validating the authenticity of the position tracking information using the sensor information thereby to detect a GPS fake data attack when the authenticity is not validated;
    wherein the local vehicle conditions comprise conditions dependent on the absolute position of the vehicle or a change in the position of the vehicle, including one or more of the vehicle speed, the vehicle steering angle, the vehicle distance travelled, the fuel tank level; and
    the means for validating is for verifying that first and second GPS position tracking locations differ by an amount corresponding to a change in position derived from the sensor signals;
    and wherein the local vehicle conditions further comprise local environmental conditions including ambient light levels and/or the vehicle headlight or tail light output; and
    the means for validating is for verifying that the ambient light levels and/or the vehicle headlight or tail light output are consistent with a corresponding environmental condition at the time and location given by the position tracking function.

2. A system as claimed in claim 1, wherein the local vehicle conditions further comprise wireless signals broadcast in the vicinity of the vehicle, and wherein the means for validating is for verifying that the detected wireless signals are consistent with the location given by the position tracking function.

3. A system as claimed in claim 2, wherein a sensor (54,56,57,58,60,61 ,62) is for detecting one or more of:

    RDS signals of FM radio transmissions,
    SI data on DVB or DAB broadcasts,
    mobile telephony signals,
    radio signal levels at predetermined frequencies,
    naval and avionic signals,
    WiFi access point signals.

4. A system as claimed in claim 3, wherein the sensor is for detecting mobile telephony signals, and the system further comprises a mobile telephony receiver (54) and wherein the mobile telephony receiver (54) implements a position tracking function, and wherein the validating means verifies correspondence between the position tracking information of the mobile telephony receiver (54) and of the satellite navigation receiver (52).

5. A system as claimed in any preceding claim, wherein the vehicle mounted unit further comprises a first memory device for storing toll payment information comprising toll values for post-billing or prepaid toll values.

6. A method for validating position tracking information provided by a vehicle-mounted unit having a satellite navigation receiver (52), the method comprising:

determining the routes taken by a vehicle based on the position tracking information;
detecting local vehicle conditions, which are independent of the satellite signals, using signals from two or more sensors; and
validating the authenticity of the position tracking information using the sensor information thereby to detect a GPS fake data attack when the authenticity is not validated;
wherein the local vehicle conditions comprise conditions dependent on the absolute position of the vehicle or a change in the position of the vehicle, including one or more of the vehicle speed, the vehicle steering angle, the vehicle distance travelled, the fuel tank level, and the validating comprises verifying that first and second GPS position tracking locations differ by an amount corresponding to a change in position derived from the sensor signals; and
wherein the local vehicle conditions further comprise local environmental conditions including ambient light levels and/or the vehicle headlight or tail light output, and the validating comprises verifying that the ambient light levels and/or the vehicle headlight or tail light output are consistent with a corresponding environmental condition at the time and location based on the position tracking information.

7. A method as claimed in claim 6, wherein the local vehicle conditions further comprise wireless signals broadcast in the vicinity of the vehicle, and the validating comprises verifying that the detected wireless signals are consistent with the location given by the position tracking information.

8. A method as claimed in claim 7, wherein detecting a local vehicle condition comprises detecting one or more of:

RDS signals of FM radio transmissions,
SI data on DVB or DAB broadcasts; mobile telephony signals,
radio signal levels at predetermined frequencies,
naval and avionic signals,
WiFi access point signals.

9. A method as claimed in claim 8, wherein detecting a local vehicle condition comprises detecting mobile telephony signals and the method further comprises implementing a position tracking function in a mobile telephony receiver of the vehicle mounted unit, and wherein the validating comprises verifying correspondence between the position tracking information of the mobile telephony receiver and of the satellite navigation receiver.

**Patentansprüche**

1. Straßenmautsystem, umfassend eine am Fahrzeug installierte Einheit mit einem Satellitennavigationsempfänger (52), der eine Positionsverfolgungsfunktion implementiert, die Zeit und Position als GPS-Signale codiert, wobei das System ferner Folgendes umfasst:

Mittel (34, 40) zum Bestimmen der von dem Fahrzeug gefahrenen Wege basierend auf Positionsverfolgungsinformationen, die von der Positionsverfolgungsfunktion angegeben werden;
zwei oder mehr Sensoren (54, 56, 57, 58, 60, 61, 62) zum Erfassen der lokalen Fahrzeugbedingungen, die von dem Satellitennavigationssignal unabhängig sind; und
Mittel zum Validieren der Echtheit der Positionsverfolgungsinformationen unter Verwendung der Sensorinformationen, um damit einen Angriff durch falsche GPS-Daten zu erfassen, wenn die Echtheit nicht validiert ist;
wobei die lokalen Fahrzeugbedingungen Bedingungen umfassen, die von der absoluten Position des Fahrzeugs oder einer Änderung der Fahrzeugposition abhängig sind, einschließlich einem oder einer Mehrzahl von Fahrzeuggeschwindigkeit, Fahrzeuglenkwinkel, zurückgelegter Fahrzeugentfernung, Kraftstofftankstand; und
das Validierungsmittel dient dem Verifizieren dessen, dass der erste und der zweite GPS-Positionsverfolgungsort sich um einen Betrag voneinander unterscheiden, der mit einer von dem Sensorsignal abgeleiteten Positionsänderung übereinstimmt; und

wobei die lokalen Fahrzeugbedingungen ferner lokale Umgebungsbedingungen umfassen, einschließlich der Stärke der Umgebungsbeleuchtung und/oder die Leistung der Fahrzeugscheinwerfer oder der Heckleuchten; und

das Validierungsmittel dient dem Validieren dessen, dass die Stärke der Umgebungsbeleuchtung und/oder die Leistung der Fahrzeugscheinwerfer oder der Heckleuchten mit den jeweiligen Umgebungsbedingungen zu der Zeit und an dem Ort, der von der Positionsverfolgungsfunktion angegeben wird, übereinstimmen.

2. System gemäß Anspruch 1, wobei die lokalen Fahrzeugbedingungen ferner in der unmittelbaren Umgebung des Fahrzeugs ausgestrahlte Radiosignale umfassen, und wobei das Validierungsmittel dem Validieren dessen, dass die erfassten Radiosignale mit der durch die Positionsverfolgungsfunktion angegebenen Position übereinstimmen, dient.

3. System gemäß Anspruch 2, wobei ein Sensor (54, 56, 57, 58, 60, 61, 62) zum Erfassen von einem oder einer Mehrzahl von Folgendem dient:

RDS-Signalen aus FM-Radioübertragungen,
SI-Daten aus DVB- oder DAB-Übertragungen
mobilen Telefonie-Signalen,
Radiosignalpegeln bei vorbestimmten Frequenzen,
Marine- und Avioniksignalen,
WiFi- Zugriffspunktsignalen.

4. System gemäß Anspruch 3, wobei der Sensor dem Erfassen mobiler Telefonie-Signale dient, und wobei das System ferner einen mobilen Telefonie-Empfänger (54) umfasst, und wobei der mobile Telefonie-Empfänger (54) eine Positionsverfolgungsfunktion implementiert, und wobei das Validierungsmittel validiert, dass die Positionsverfolgungsinformationen des mobilen Telefonie-Empfängers (54) und des Satellitennavigationsempfängers (52) übereinstimmen.

5. System gemäß einem der vorherigen Ansprüche, wobei die am Fahrzeug installierte Einheit ferner ein erstes Speichergerät zum Speichern von Mautzahlungsinformationen umfasst, welches die Mautwerte für nachträglich in Rechnung gestellte und vorab bezahlte Mautwerte umfasst.

6. Verfahren zum Validieren von Positionsverfolgungsinformationen, die von einer am Fahrzeug installierten Einheit mit einem Satellitennavigationsempfänger (52) bereitgestellt werden, wobei das Verfahren Folgendes umfasst:

Bestimmen der von einem Fahrzeug gefahrenen Wege basierend auf den Positionsverfolgungsinformationen;
Erfassen der lokalen Fahrzeugbedingungen, die von den Satellitensignalen unabhängig sind, unter Verwendung der Signale von zwei oder mehr Sensoren; und
Validieren der Echtheit der Positionsverfolgungsinformationen, durch Verwenden der Sensorinformationen, um damit einen Angriff durch falsche GPS-Daten zu erfassen, wenn die Echtheit nicht validiert ist;
wobei die lokalen Fahrzeugbedingungen Bedingungen umfassen, die von der absoluten Position des Fahrzeugs oder einer Änderung der Fahrzeugposition abhängig sind, einschließlich einem oder einer Mehrzahl von Fahrzeuggeschwindigkeit, Fahrzeuglenkwinkel, zurückgelegter Fahrzeugentfernung, Kraftstofftankstand, und das Validieren umfasst ein Verifizieren dessen, dass der erste und der zweite GPS-Positionsverfolgungsort sich um einen Betrag voneinander unterscheiden, der mit der von dem Sensorsignal abgeleiteten Positionsänderung übereinstimmt; und
wobei die lokalen Fahrzeugbedingungen ferner lokale Umgebungsbedingungen umfassen, einschließlich der Stärke der Umgebungsbeleuchtung bzw. die Leistung der Fahrzeugscheinwerfer oder der Heckleuchten, und das Validieren umfasst das Verifizieren dessen, dass die Stärke der Umgebungsbeleuchtung und/oder die Leistung der Fahrzeugscheinwerfer oder der Heckleuchten mit den jeweiligen Umgebungsbedingungen zu der Zeit und an dem Ort, der von der Positionsverfolgungsinformation angegeben wird, übereinstimmen.

7. Verfahren gemäß Anspruch 6, wobei die lokalen Fahrzeugbedingungen ferner in der unmittelbaren Umgebung des Fahrzeugs ausgestrahlte Radiosignale umfassen, und das Validieren umfasst, dass die erfassten Radiosignale mit der durch die Positionsverfolgungsinformation angegebenen Position übereinstimmen.

8. Verfahren gemäß Anspruch 7, wobei das Erfassen eines lokalen Fahrzeugzustands ferner das Erfassen von einem oder einer Mehrzahl von Folgendem ist:

RDS-Signalen von FM-Radioübertragungen,
SI-Daten von DVB- oder DAB-Übertragungen
Mobilen Telefonie-Signalen,
Radiosignalpegeln bei vorbestimmten Frequenzen,
Marine- und Avioniksignalen,
WiFi- Zugriffspunktsignalen.

**9.** Verfahren gemäß Anspruch 8, wobei das Erfassen eines lokalen Fahrzeugzustands das Erfassen mobiler Telefonie-Signale umfasst, und das Verfahren umfasst ferner das Implementieren einer Positionsverfolgungsfunktion in einem mobilen Telefonie-Empfänger der am Fahrzeug installierten Einheit, und wobei das Validieren das Verifizieren der Übereinstimmung der Positionsverfolgungsinformation des mobilen Telefonie-Empfängers und des Satellitennavigationsempfängers umfasst.

## Revendications

**1.** Système de péage routier comprenant une unité montée sur véhicule comportant un récepteur de navigation par satellite (52) mettant en oeuvre une fonction de localisation de position qui code l'heure et la position dans des signaux GPS, dans lequel le système comprend en outre :

des moyens (34,40) pour déterminer les itinéraires empruntés par le véhicule en se basant sur des informations de localisation de position fournies par la fonction de localisation de position;
deux capteurs ou plus (54, 56, 57, 58, 60, 61, 62) pour détecter des conditions locales de véhicule qui sont indépendantes des signaux de navigation par satellite; et
des moyens pour valider l'authenticité des informations de localisation de position en utilisant les informations de capteur pour ainsi détecter une attaque par de fausses données GPS lorsque l'authenticité n'est pas validée;
dans lequel les conditions locales du véhicule comprennent des conditions dépendant de la position absolue du véhicule ou d'un changement de position du véhicule, comprenant un ou plusieurs de la vitesses du véhicule, l'angle de braquage du véhicule, la distance parcourue par le véhicule, le niveau du réservoir de carburant; et
le moyen de validation est destiné à vérifier que les premier et second emplacements de localisation de position GPS diffèrent d'une quantité correspondant à un changement de position dérivé des signaux du capteur;
et dans lequel les conditions locales du véhicule comprennent en outre des conditions environnementales locales comprenant des niveaux de lumière ambiante et/ou d'allumage des phares ou des feux arrières du véhicule; et
le moyen de validation est destiné à vérifier que les niveaux d'éclairage ambiant et/ou d'allumage des phares ou des feux arrières du véhicule correspondent à une condition environnementale au moment et à l'emplacement donnés par la fonction de localisation de position.

**2.** Système selon la revendication 1, dans lequel les conditions du véhicule local comprennent en outre des signaux téléportés diffusés dans le voisinage du véhicule, et dans lequel le moyen de validation est destiné à vérifier que les signaux téléportés détectés sont cohérents avec l'emplacement fourni par la fonction de localisation de position.

**3.** Système selon la revendication 2, dans lequel un capteur (54, 56, 57, 58, 60, 61, 62) est destiné à détecter un ou plusieurs des éléments suivants :

Des signaux RDS de transmissions radio FM,
Des données SI sur les émissions DVB ou DAB,
Des signaux de téléphones portables,
Des niveaux de signaux radio à des fréquences prédéterminées,
Des signaux maritimes et avioniques,
Des signaux de point d'accès WiFi.

**4.** Système selon la revendication 3, dans lequel le capteur est destiné à détecter des signaux de téléphonie mobile, et le système comprend en outre un récepteur de téléphonie mobile (54), et dans lequel le récepteur de téléphonie mobile (54) met en oeuvre une fonction de localisation de position, et dans lequel le moyen vérifie la correspondance entre les informations de localisation de position du récepteur de téléphonie mobile (54) et du récepteur de navigation par satellite (52).

5. Système selon l'une quelconque des revendications précédentes, dans lequel l'unité montée sur véhicule comprend en outre un premier dispositif de mémoire pour stocker des informations de paiement de péage comprenant des valeurs de péage pour des valeurs de péage post-facturation ou prépayées.

6. Procédé pour valider des informations de localisation de position fournies par une unité montée sur un véhicule ayant un récepteur de navigation par satellite (52), le procédé comprenant :

de déterminer les routes empruntées par un véhicule à partir des informations de localisation de position;
de détecter les conditions locales du véhicule, qui sont indépendantes des signaux satellites, au moyen de signaux provenant de deux capteurs ou plus; et
la validation de l'authenticité des informations de localisation de position au moyen des informations de capteur pour ainsi détecter une attaque par de fausses données GPS lorsque l'authenticité n'est pas validée;
dans lequel les conditions locales du véhicule comprennent des conditions dépendantes de la position absolue du véhicule ou d'un changement de position du véhicule, comprenant une ou plusieurs de la vitesse du véhicule, l'angle de braquage du véhicule, la distance parcourue par le véhicule, le niveau du réservoir de carburant, et la validation comprend la vérification que les premier et second emplacements de localisation de position GPS diffèrent d'une quantité correspondant à un changement de position dérivé des signaux du capteur; et
dans lequel les conditions locales du véhicule comprennent en outre des conditions environnementales locales dont les niveaux de lumière ambiante et/ou d'allumage des phares ou des feux arrières, et la validation comprend la vérification que les niveaux de lumière ambiante et/ou l'allumage des phares ou des feux arrières correspondent à la condition de l'environnement au moment et au lieu selon les informations de localisation de position.

7. Procédé selon la revendication 6, dans lequel les conditions locales du véhicule comprennent en outre des signaux téléportés diffusés à proximité du véhicule, et la validation comprend de vérifier que les signaux téléportés détectés sont cohérents avec l'emplacement fourni par les informations de localisation de position.

8. Procédé selon la revendication 7, dans lequel la détection d'une condition locale de véhicule comprend la détection d'un ou de plusieurs des éléments suivants :

Des signaux RDS de transmissions radio FM,
Des données SI sur les diffusions DVB ou DAB; des signaux de téléphonie mobile,
Des niveaux de signaux radio à des fréquences prédéterminées,
Des signaux maritimes et avioniques,
Des signaux de point d'accès WiFi.

9. Procédé selon la revendication 8, dans lequel la détection d'une condition locale de véhicule comprend la détection de signaux de téléphonie mobile, et le procédé comprend en outre la mise en oeuvre d'une fonction de localisation de position dans un récepteur de téléphonie mobile de l'unité montée dans le véhicule, et dans lequel la validation comprend de vérifier la correspondance entre des informations de localisation de position du récepteur de téléphonie mobile et du récepteur de navigation par satellite.

FIG. 1

FIG. 2

34

36

32

e.g.:Smart
XA

GPS
data

30

Satellite Positioning
(GPS or Galileo)
decoder

Clock/GPS data/
mutual authenticated/encrypted

Cellular Modem
(GSM/SMS or GPRS)

38

Smart XA stores the GPS
and clock data

## FIG. 3

42

32

30

40

e.g.:Smart
XA

GPS
data

Satellite Positioning
(GPS or Galileo)
decoder

Clock/GPS data/
mutual authenticated/encrypted

Microprocessor
(+memory- database of
roads and prices)

Calculated billing

Cellular Modem
(GSM/SMS or GPRS)

38

Smart XA deducts money according
The calculated billing

## FIG. 4

FIG. 5

FIG. 6

FIG. 7

| GNSS | Sensors | Host | Smart Card | Back-End Server |
|------|---------|------|------------|-----------------|

$S_1$ = getSensorData()

$G_1$ = getGNSSData()

CommitData($S_1$,$G_1$)

Correlate()

$S_2$ = getSensorData()

$G_2$ = getGNSSData()

CommitData($S_1$,$G_1$)

Correlate()

StatusRequest()

StatusRequest()

Correlation Status + Signature

In this case it is the back-end server that forces a correlation status request, which is forwarded to the SC. Status is returned in a secure way (here with a signature)

# FIG. 8

FIG. 9

| GNSS | Sensors | Host | Smart Card | Back-End Server |
|------|---------|------|------------|-----------------|

$S_0$ = previous signature

SignGPSData($T_1$,$G_1$)

$T_1$,$G_1$ = getGNSSData()

StoreLastGPSTime($T_1$)

$S_1$ $\qquad$ $S_1$ = Sign($S_0$,$T_1$,$G_1$)

SignData($D_2$)

$D_2$ = getSensorData()

$T_1$ = GetLastGPSTime()

$S_2$ $\qquad$ $S_2$ = Sign($S_1$,$T_1$,$D_2$)

SignData($D_3$)

$D_3$ = getSensorData()

$T_1$ = GetLastGPSTime()

$S_3$ $\qquad$ $S_3$ = Sign($S_2$,$T_1$,$D_3$)

SignGPSData($T_4$,$G_4$)

$T_4$,$G_4$ = getGNSSData()

StoreLastGPSTime($T_4$)

$S_4$ $\qquad$ $S_4$ = Sign($S_3$,$T_4$,$G_4$)

DataSign($D_5$)

$D_5$ = getSensorData()

$T_4$ = GetLastGPSTime()

$S_5$ $\qquad$ $S_5$ = Sign($S_4$,$T_4$,$D_5$)

TransmitData($S_0$,$T_1$,$G_1$,$D_2$,$D_3$,$T_4$,$G_4$,$D_5$,$S_5$)

VerifyDataValidity()

Assume symmetric cryptography signature, so that only init. and final signature of the chain must be transmitted

ComputeCost()

FIG. 10

27

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6816707 B
- EP 1457928 A
- WO 2008068679 A
- WO 2008032075 A